# DEMANDE DE BREVET EUROPEEN

(11) **EP 1 566 297 A1**
(43) Date de publication de la demande: **24.08.2005**
(21) Numéro de dépôt: 05101165.8
(22) Date de dépôt: 16.02.2005
(51) Int. Cl.: B60J 1/20, B60J 7/00

(54) **Dispositif d'occultation pour véhicule automobile, et véhicule correspondant**

(30) Priorité: 18.02.2004 FR 0401645
(71) Demandeur: WAGON SAS, 79302 Bressuire Cédex (FR)
(72) Inventeur: Jolivet, David M., 79300 Bressuire (FR)
(74) Mandataire: Bioret, Ludovic

(57) **Abrégé**

L'invention concerne un dispositif d'occultation pour un véhicule automobile, mettant en oeuvre une toile d'occultation mobile entre au moins deux positions, une position repliée et une position déployée. Ce dispositif d'occultation comprend au moins une baleine destinée à maintenir la toile dans une forme prédéterminée, lorsque cette dernière est déployée.

Selon l'invention, la ou les baleines sont réalisées dans un matériau souple et sont directement rapportées ou formées sur la toile d'occultation.

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la forme de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 1,5 m en longueur, et de 1 m en largeur, pour occulter un pavillon vitré, la toile "pocherait", c'est-à-dire que ses bords latéraux se rapprocheraient légèrement l'un de l'autre, ce qui provoquerait un creux au centre de la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, les pavillons des véhicules sont le plus souvent non plats mais au contraire incurvés ou galbés, au moins dans le sens de la largeur et également parfois dans le sens de la longueur. À nouveau, le simple déploiement d'une toile d'occultation ne serait alors ni efficace, ni ergonomique, ni esthétique.

Une technique connue de l'art antérieur propose l'utilisation de baleines en plastique ou en métal qui maintiennent la toile d'occultation dans la position déployée souhaitée. Selon une technique connue, les baleines sont logées dans la toile en les glissant à l'intérieur de fourreaux constitués chacun par une pièce de tissu rapportée sur la toile d'occultation et solidarisée par exemple par soudure à celle-ci.

Un des inconvénients de cette technique réside dans le fait que l'encombrement d'un tel dispositif d'occultation est relativement important, notamment lorsque celui-ci est en position repliée. Une solution à ce problème a été décrite dans le document publié sous le numéro FR 2805495 déposé au même nom que le présente demande. Selon cette technique en effet, les baleines sont désolidarisées de la toile d'occultation lorsque cette dernière est repliée, un système permettant de coupler les baleines à la toile au fur et à mesure de son déploiement. Cette technique permet effectivement de réduire l'encombrement de la toile d'occultation, mais les baleines, stockées à part, restent encombrantes. Ainsi, selon les techniques connues de l'art antérieur, aucune ne présente de solution satisfaisante quant au problème d'encombrement.

Un autre inconvénient de ces techniques réside dans le fait qu'elles sont complexes et coûteuses à mettre en oeuvre. En effet, dans le cas des dispositifs d'occultation présentant des baleines glissées dans des fourreaux, leur procédé de fabrication selon lequel des pièces de tissu sont rapportées et soudées sur la toile d'occultation et les baleines ensuite glissées à l'intérieur est long et coûteux à mettre en oeuvre. Dans le cas de dispositifs comprenant des baleines se désolidarisant de la toile d'occultation, ceux-ci présentent un système de rail de guidage et des baleines spécifiques présentant un élément d'accrochage. Ces dispositifs sont donc complexes et coûteux à fabriquer et à monter.

Encore un autre inconvénient de ces techniques réside dans leur caractère inesthétique. En effet, dans le cas où les baleines sont désolidarisées de la toile d'occultation, celles-ci restent visibles dans l'habitacle de la voiture ou nécessite un logement spécifique. Dans le cas où les baleines sont glissées dans les fourreaux prévus à cet effet, la toile risque d'être « marquée » lors de l'enroulement à cause de la présence des baleines rigides.

L'invention a notamment pour objectif de pallier ces différents inconvénients de l'état de l'art.

Plus précisément, l'invention a pour objectif de fournir un dispositif d'occultation pour véhicule automobile, et par exemple pour le pavillon de ce dernier (ou plus généralement sur toute surface importante), dont l'encombrement soit le plus réduit possible, notamment lorsqu'il est replié, afin qu'il puisse être aisément monté dans le véhicule.

Un autre objectif de l'invention est de fournir un dispositif d'occultation qui soit le plus léger possible.

Encore un autre objectif de l'invention est de proposer un procédé de fabrication d'un tel dispositif d'occultation qui soit simple et peu coûteux à mettre en oeuvre.

Un autre objectif de l'invention est de fournir un tel dispositif d'occultation qui soit efficace et qui présente un aspect visuel de bonne qualité, lorsqu'il est déployé.

Ces objectifs, ainsi que d'autres qui apparaîtront par la suite, sont atteints à l'aide d'un dispositif d'occultation pour un véhicule automobile, mettant en oeuvre une toile d'occultation mobile entre au moins deux positions, une position repliée et une position déployée. Ce dispositif d'occultation comprend au moins une baleine destinée à maintenir ladite toile dans une forme prédéterminée, lorsque cette dernière est déployée.

Selon l'invention, la ou lesdites baleines sont réalisées dans un matériau souple et sont directement rapportées ou formées sur ladite toile d'occultation.

Ainsi, l'invention repose sur une approche tout à fait nouvelle et inventive consistant à réaliser la ou les baleines permettant le maintien de la toile dans une matière souple et à les reporter (ou à les former) directement sur la toile d'occultation. Ainsi, lorsque le dispositif d'occultation est en position repliée, l'encombrement est considérablement réduit, et le procédé de fabrication du dispositif est plus simple et moins coûteux à mettre en oeuvre.

Le montage et le réglage du dispositif pourront également être simplifiés.

L'invention permet ainsi d'obtenir une solution particulièrement adaptée à l'occultation de surfaces de grandes dimensions d'un véhicule automobile. Il peut notamment s'agir d'un pavillon intégralement ou en grande partie vitré, ou de la vitre arrière du véhicule. Le dispositif proposé par l'invention peut également servir de cache-bagages par exemple.

De façon préférée, la solidarisation des baleines sur la toile d'occultation peut se faire par collage ou par soudure. Le collage pourra être préféré car, lors du report par soudure, les lignes de soudure pourraient être visibles du côté visible de la toile.

De façon avantageuse, les baleines pourront être surmoulées ou extrudées et peuvent présenter une section transversale en chapeau de gendarme. Cette forme présente en effet l'avantage de s'écraser facilement lors de l'application, pendant le repliement, d'une contrainte -mécanique par exemple- sur les baleines en matériau souple.

Selon un premier mode de réalisation avantageux de l'invention, les baleines sont réalisées dans un matériau compressible, comme par exemple les mousses à cellules ouvertes.

Préférentiellement, le matériau utilisé pourra être un matériau expansé de type polyuréthanne, polypropylène ou polystyrène. L'utilisation de ces matériaux permet de réduire le poids du dispositif d'occultation et, lors de l'application d'une contrainte, notamment lors du repliement et dans la position repliée du dispositif d'occultation, de réduire au maximum son encombrement. En position déployée en revanche, les baleines sont affranchies de cette contrainte et retrouvent leur forme d'origine.

Selon un second mode de réalisation avantageux de l'invention, les baleines sont réalisées dans un matériau souple et incompressible (ou faiblement compressible). De façon préférée, pourront être utilisés le caoutchouc, le TPE (Thermo Plastique Elastomère) ou l'EPDM (Ethylène Propylène Diène Monomère). Ces matériaux sont déformables sous la contrainte et permettent donc comme le précédent mode de réalisation d'obtenir un encombrement minimal du dispositif d'occultation en position repliée.

Avantageusement, les baleines peuvent comprendre un élément longitudinal de renfort. Ces éléments peuvent être en plastique et/ou métallisés et permettent le renforcement de la baleine. Ils peuvent notamment présenter un galbe particulier de façon à suivre la courbe de la surface à occulter si celle-ci n'est pas plane.

Ils peuvent ainsi être plans ou présenter une section incurvée par exemple. Ces éléments de renfort peuvent être intégrés à l'intérieur du matériau souple dans lequel la baleine est réalisée, ce qui permet d'éviter que ceux-ci ne « marquent » la toile en position repliée.

Selon une autre approche avantageuse de l'invention, les baleines peuvent être reliées par un élément de liaison. Cet élément de liaison peut notamment comprendre une fine couche de matériau souple, celui-ci pouvant être le même que celui dans lequel les baleines sont réalisées.

L'ensemble est alors préférentiellement réalisé par moulage et permet ainsi une simplification et un coût moindre, non seulement du procédé de fabrication, mais également du montage et du réglage de l'ensemble des baleines, celles-ci ne devant alors plus être rapportées et positionnées indépendamment les unes des autres.

Plus généralement, la toile, appelée ainsi par extension et par commodité, et les baleines peuvent être réalisées dans une même pièce de matériau souple et l'ensemble peut alors être réalisé par moulage, avec les mêmes avantages que précédemment, en s'affranchissant en plus de l'étape de report des baleines sur la toile.

Préférentiellement, la toile d'occultation est montée sur un tube enrouleur.

Avantageusement, les baleines sont suffisamment espacées pour, lors de l'enroulement, s'aplatir indépendamment les unes des autres, de façon qu'en position repliée, l'encombrement du dispositif soit minimal.

L'invention telle que présentée concerne également tout véhicule automobile comprenant un tel dispositif d'occultation.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente un premier mode de réalisation de l'invention illustrant une coupe transversale d'un dispositif d'occultation comprenant des baleines réalisées dans une matière souple et compressible ;
- les figures 2A à 2C présentent trois variantes de baleines pouvant équiper le store de la figure 1;
- la figure 3 illustre, selon une coupe transversale, la mise en oeuvre de baleines, réalisées dans une matière souple et incompressible, présentant ou non un élément longitudinal de renfort ;
- la figure 4 présente la coupe transversale d'un mode de réalisation selon lequel les baleines sont directement formées sur la toile d'occultation.

Le principe général de l'invention repose donc sur la mise en oeuvre d'un dispositif d'occultation mobile entre au moins deux positions, une position repliée et une position déployée, destiné à occulter une surface importante d'un véhicule. Il peut notamment s'agir d'un pavillon intégralement ou en grande partie vitré. L'invention peut également être utilisée pour une vitre arrière de véhicule, un cache-bagages, etc.

Selon l'invention, les baleines sont réalisées dans une matière souple et sont directement rapportées ou formées sur la toile.

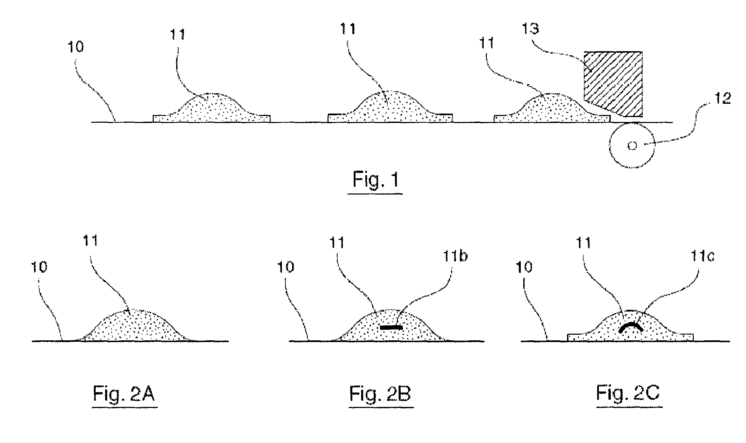

En référence à la figure 1, un premier mode de réalisation d'un dispositif selon l'invention comprend une toile 10, montée sur un tube enrouleur 12, sur laquelle sont rapportées, par collage ou par soudure par exemple, des baleines 11 réalisées dans une matière compressible.

Typiquement, ces baleines 11 sont surmoulées ou extrudées et sont réalisées par exemple en mousse à cellules ouvertes comme les matériaux expansés de type polyuréthanne, polypropylène ou polystyrène par exemple.

Telles qu'illustrées, les baleines 11 présentent une section transversale en chapeau de gendarme, facilitant leur compression lors de l'enroulement. D'autres formes (triangulaires, incurvées) sont également envisageables.

Comme indiqué ci-dessus, les baleines 11 peuvent être rapportées sur la toile par soudure ou par collage, ce qui permet une mise en oeuvre simple et peu coûteuse du procédé de fabrication du dispositif. Un des inconvénients du report des baleines par soudure reste que les lignes de soudure peuvent être visibles du côté de la toile exposé à la vue. En revanche, lorsque les baleines 11 sont collées sur la toile, cet inconvénient n'est plus rencontré.

Selon ce mode de réalisation, lors de l'enroulement, l'ensemble formé par la toile d'occultation et les baleines présente un encombrement réduit. Les baleines s'écrasent au fur et à mesure de l'enroulement.

Des moyens de compression assurant la compression lors de l'enroulement, ou juste avant, peuvent être prévus, par exemple sous la forme d'un guide fixe (13, figure 1) ou d'un rouleau (42, figure 2).

Le nombre, la forme et l'espacement des baleines 11 sont choisis en fonction des caractéristiques de la toile, et de sa surface. Classiquement, dans le cas d'un pavillon, on prévoira un espacement compris entre 15 et 25 cm.

Les baleines peuvent présenter une largeur comprise entre 1 et 3 cm et une épaisseur de l'ordre de 0,2 à 1 cm

De façon préférée, les baleines sont suffisamment espacées pour s'écraser indépendamment les unes des autres lors de l'enroulement, ce qui permet de réduire d'autant mieux l'encombrement. Lorsque la toile est déroulée, en position déployée pour l'occultation du pavillon du véhicule par exemple, les baleines retrouvent leur forme d'origine et permettent le maintien de la toile. D'autre part, ces baleines, réalisées dans une matière souple, ne risquent pas de détériorer la toile ou de la marquer, lorsque celle-ci est enroulée.

Selon un autre mode de réalisation, les baleines peuvent être réliées entre elles par des éléments de liaison. Ceux-ci peuvent notamment être réalisés dans une fine couche du même matériau souple que celui dans lequel les baleines sont réalisées. L'ensemble peut ainsi être fabriqué par moulage et rapporté directement sur la toile d'occultation. Ce mode de réalisation permet de s'affranchir des étapes de positionnement et de report des baleines une à une, et permet une simplification du procédé de fabrication, du montage et du réglage du dispositif.

La figure 2A présente une baleine 11 réalisée entièrement dans une matière souple et compressible. Les figures 2B et 2C illustrent des baleines 11 comprenant un élément longitudinal de renfort, respectivement 11B et 11C.

Ces éléments de renfort peuvent présenter une structure plane comme l'illustre l'élément 11b ou une section transversale incurvée, comme illustré par l'élément 11c, ou encore toute autre forme adéquate, et peuvent être réalisés dans une matière plastique et/ou métallisée.

Ces éléments longitudinaux de renfort permettent d'assurer un meilleur maintien de la toile d'occultation lorsque celle-ci est en position déployée. Les baleines et/ou les éléments de renfort peuvent être conçus pour donner un galbe prédéterminé à la toile en position déployée.

Il est bien sûr possible que seules certaines baleines (par exemple une sur deux) soient ainsi renforcées.

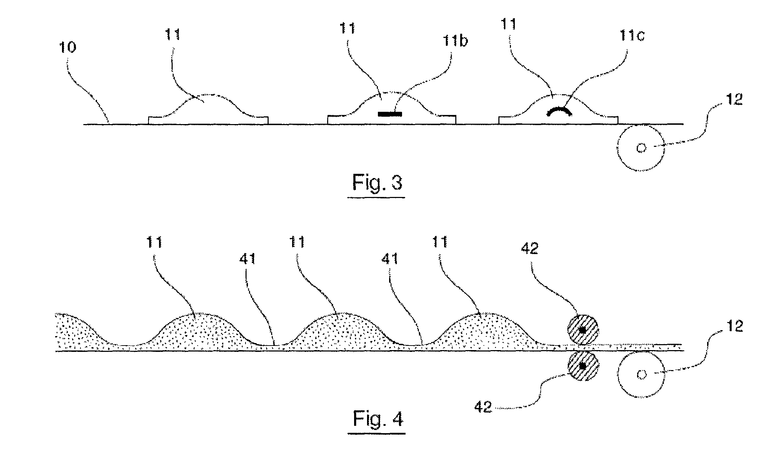

La figure 3 illustre un autre mode de réalisation de l'invention selon lequel les baleines 11 sont réalisées dans une matière souple mais non (ou faiblement) compressible. Ces matériaux sont des matériaux déformables sous une contrainte, comme par exemple le caoutchouc, le TPE (Thermo Plastique Elastomère) ou l'EPDM (Ethylène Propylène Diène Monomère). Ces baleines 11 peuvent présenter ou non un élément longitudinal de renfort 11b,11c comme décrit précédemment.

Ce mode de réalisation permet également un faible encombrement du dispositif lorsque la toile est en position repliée, mais assure également une durée de vie plus longue de celui-ci. En effet, lorsque les baleines sont réalisées dans une matière compressible, celle-ci risque éventuellement de voir sa compressibilité diminuer avec le temps et l'usage.

La figure 4 présente encore un autre mode de réalisation selon lequel les baleines 11 sont directement formées sur l'élément d'occultation, appelé toile par extension et par commodité. Selon ce mode de réalisation, la toile et les baleines sont réalisées dans une même pièce de matériau souple, de préférence dans une matière compressible de type mousse, comme celles citées précédemment par exemple. Les baleines 11 correspondent aux zones ou l'épaisseur de l'ensemble est la plus importante. Au niveau des intervalles 41 entre les baleines 11, l'épaisseur est réduite à une fine couche de matière souple.

Ce mode de réalisation permet de simplifier le processus de fabrication du dispositif. En effet, l'ensemble du dispositif étant réalisé d'une seule pièce, une seule matière première et un seul moule sont nécessaires à sa réalisation, les étapes de positionnement et de solidarisation des baleines n'intervenant plus. Ce mode de réalisation permet également l'obtention d'un dispositif d'occultation très léger lorsque celui-ci est réalisé totalement en mousse. D'autre part, la forme de l'ensemble et les variations d'épaisseur peuvent être optimisées en fonction du maintien des dispositifs en position déployée, de leur encombrement en position repliée mais également de façon à permettre leur empilement face à face deux à deux, ce qui permet un gain de place lors de leur stockage.

D'une façon générale, dans les différents modes de réalisation décrits, les baleines pourront se prolonger (ou présenter des prolongements adaptés) de façon que leurs extrémités soient guidées et/ou maintenues dans des rails prévus à cet effet.

## Revendications

1. Dispositif d'occultation pour un véhicule automobile, comprenant une toile d'occultation mobile entre au moins deux positions, une position repliée et une position déployée, portant au moins une baleine destinée à maintenir ladite toile dans une forme prédéterminée, lorsque cette dernière est déployée,
**caractérisé en ce que** la ou lesdites baleines sont réalisées dans un matériau souple et sont directement rapportées ou formées sur ladite toile d'occultation.

2. Dispositif d'occultation selon la revendication 1, **caractérisé en ce que** la ou lesdites baleines sont rapportées par collage ou par soudure sur la toile d'occultation.

3. Dispositif d'occultation selon l'une quelconque des revendications 1 et 2, **caractérisé en ce que** la ou lesdites baleines sont surmoulées ou extrudées.

4. Dispositif d'occultation selon l'une quelconque des revendications 1 à 3, **caractérisé en ce que** la ou lesdites baleines présentent une section transversale en chapeau de gendarme.

5. Dispositif d'occultation selon l'une quelconque des revendications 1 à 4, **caractérisé en ce que** la ou lesdites baleines sont réalisées dans un matériau compressible.

6. Dispositif d'occultation selon la revendication 5, **caractérisé en ce que** le matériau compressible est de type mousse à cellules ouvertes.

7. Dispositif d'occultation selon la revendication 6, **caractérisé en ce que** ledit matériau compressible est choisi parmi le polyuréthanne, le polypropylène et le polystyrène.

8. Dispositif d'occultation selon l'une quelconque des revendications 1 à 4, **caractérisé en ce que** la ou lesdites baleines sont réalisées dans un matériau incompressible.

9. Dispositif d'occultation selon la revendication 8, **caractérisé en ce que** ledit matériau incompressible est choisi parmi le choisi parmi le caoutchouc, le TPE (Thermo Plastique Elastomère) et l'EPDM (Ethylène Propylène Diène Monomère).

10. Dispositif d'occultation selon l'une quelconque des revendications 1 à 9, **caractérisé en ce que** la ou lesdites baleines comprennent au moins un élément longitudinal de renfort.

11. Dispositif d'occultation selon la revendication 10, **caractérisé en ce que** le ou les éléments longitudinaux de renfort sont en plastique et/ou métallisés.

12. Dispositif d'occultation selon l'un quelconque des revendications 10 et 11, **caractérisé en ce que** le ou les éléments longitudinaux de renfort sont plans ou de section incurvée.

13. Dispositif d'occultation selon l'une quelconque des revendications 1 à12, **caractérisé en ce que** la ou lesdites baleines sont liées les unes aux autres par au moins un élément de liaison.

14. Dispositif d'occultation selon l'une quelconque des revendications 1 à13, **caractérisé en ce que** le ou les éléments de liaison comprennent une fine couche de matériau souple.

15. Dispositif d'occultation selon l'une quelconque des revendications 1 à14, **caractérisé en ce que** l'ensemble comprenant ladite toile d'occultation et la ou les dites baleines est réalisé dans une même pièce de matériau souple.

16. Dispositif d'occultation selon la revendication 15, **caractérisé en ce que** ledit ensemble est réalisé par moulage.

17. Dispositif d'occultation selon l'une quelconque des revendications 1 à 16, **caractérisé en ce que** ladite toile est montée sur un tube enrouleur.

18. Dispositif d'occultation selon la revendication 17, **caractérisé en ce que** lesdites baleines sont suffisamment espacées pour s'aplatir indépendamment les unes des autres lors de l'enroulement.

19. Dispositif d'occultation selon l'une quelconque des revendications 1 à 18, **caractérisé en ce que** la toile d'occultation est destinée à occulter un pavillon ou une partie d'un pavillon.

20. Véhicule automobile, **caractérisé en ce qu'**il comprend au moins un dispositif d'occultation comprenant une toile d'occultation mobile entre au moins deux positions, une position repliée et une position déployée, ledit dispositif portant au moins une baleine destinée à maintenir ladite toile dans une forme prédéterminée, lorsque cette dernière est déployée, la ou lesdites baleines étant réalisées dans une matière souple et étant directement rapportées ou formées sur ladite toile d'occultation.

21. Véhicule automobile selon la revendication 20, **caractérisé en ce que** ledit dispositif d'occultation s'étend au moins partiellement en regard du pavillon.
